# EUROPEAN PATENT SPECIFICATION

(11) **EP 3 279 033 B1**
(45) Date of publication and mention of the grant of the patent: **04.09.2019**
(21) Application number: 15887794.4
(22) Date of filing: 24.12.2015
(51) Int. Cl.: B60N 3/00, A47C 7/40, A47C 7/62, B60N 2/64, B60N 2/90, A47C 7/46

(54) **SEAT DEVICE**
SITZVORRICHTUNG
DISPOSITIF DE SIÈGE

(30) Priority: 30.03.2015 JP 2015069884
(43) Date of publication of application: 07.02.2018
(73) Proprietor: Aisin Seiki Kabushiki Kaisha, Aichi-ken, 448-8650 (JP)
(72) Inventor: OGISO, Takashi, Kariya-shi, Aichi-ken 448-8650 (JP); NOSO, Kazuo, Kariya-shi, Aichi-ken 448-8650 (JP)
(74) Representative: Cabinet Beau de Loménie
(86) International application number: PCT/JP2015/085996
(87) International publication number: WO 2016/157652

(56) References cited:
- EP-A1- 0 760 233
- EP-A1- 1 065 097
- JP-A- H0 910 268
- JP-A- H06 286 508
- JP-A- 2004 181 073
- JP-A- 2011 010 695
- JP-A- 2011 010 695
- JP-A- 2012 065 729

## Description

### TECHNICAL FIELD

The present invention relates to a seat device.

### BACKGROUND ART

Conventionally, there is a seat device including a massage airbag, which presses the back of an occupant through a backrest surface of a seatback by being selectively expanded and contracted in the interior of the seatback (see, for example, Patent Document 1). That is, the seat device includes an air supply-discharge device, which supplies (charges) internal air into the airbag and discharges the internal air from the airbag. In many cases, a pressure sensor is arranged in the supply line of the internal air. Based on the internal pressure of the airbag, which is detected by the pressure sensor, the airbag is switched between expanding operation and contracting operation.

### PRIOR ART DOCUMENT

### Patent Document

Patent Document 1: Japanese Laid-Open Patent Publication No. 7-124215

### SUMMARY OF THE INVENTION

### Problems that the Invention is to Solve

The force by which the airbag presses the back of the occupant through the backrest surface of the seatback does not necessarily corresponds to the internal pressure of the airbag. That is, in the expanding (spreading) operation of the airbag, the internal pressure of the airbag, which is selectively expanded and contracted in the interior of the seatback, is increased as the airbag presses the cover portion that forms the backrest surface of the seatback. However, the load of the occupant that acts on the backrest surface of the seatback varies greatly depending on the seating posture of the occupant. Therefore, for example, even when the internal pressure of the airbag satisfies the target value corresponding to the spread state of the airbag, the pressing force transmitted to the back of the occupant through the backrest surface of the seatback may be less than expected in certain cases. This may cause an insufficient massaging effect and, in this regard, further improvement is required.

Accordingly, it is an objective of the present invention to provide a seat device capable of massaging an occupant with improved effectiveness.

### Means for Solving the Problems

To achieve the foregoing objective and in accordance with one aspect of the present invention, a seat device is provided including the features of claim 1. Preferential embodiments are set out in the dependant claims.

### BRIEF DESCRIPTION OF THE DRAWINGS

Fig. 1 is a side view showing a seat in which a seat device according to one embodiment of the present invention is employed.
Fig. 2 is a schematic view showing an airbag, an air supply-discharge device, and a controller, which are components of the seat device of Fig. 1.
Fig. 3 is a flowchart representing a procedure of massaging control performed by the controller of Fig. 2.
Fig. 4 is a graph representing occupant load acting on a backrest surface and air discharge time of internal air needed for the contracting operation of the airbag in backrest surface load regulating control.
Figs. 5A and 5B are diagrams representing changes of the load of the occupant acting on the backrest surface caused by inclination of the seatback, which is controlled by the controller of Fig. 2.
Fig. 6 is a flowchart representing a procedure of the backrest surface load regulating control.

### MODES FOR CARRYING OUT THE INVENTION

A seat device according to one embodiment will now be described with reference to drawings.

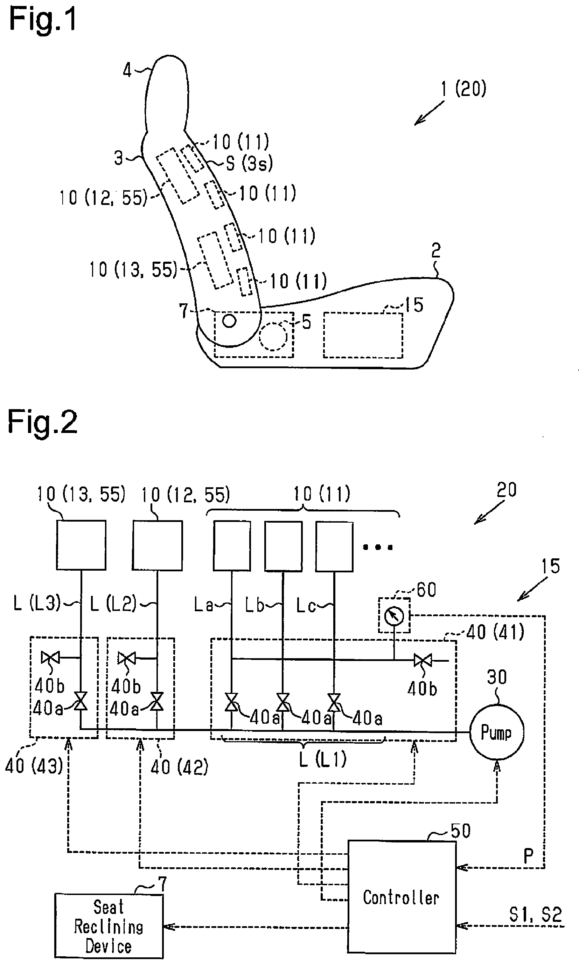

As shown in Fig. 1, a seat 1 for a vehicle includes a seat cushion 2 and a seatback 3, which is arranged at the rear end of the seat cushion 2. A headrest 4 is arranged at the upper end of the seatback 3. The seat 1 has a seat reclining device 7, which is driven by a motor 5 and is capable of regulating the inclination angle of the seatback 3.

In the seat 1 of the present embodiment, multiple airbags 10 are arranged in the interior of the seatback 3. Specifically, multiple massage airbags 11 are arranged on the inner side of a cover 3s, which forms a backrest surface S of the seatback 3. Also, seat supporting airbags 12, 13 are arranged at positions deeper than the positions of the massage airbags 11, or, specifically, in the interior of a non-illustrated seat pad (the cushion material of the seatback 3). Further, the seat 1 of the present embodiment has an air supply-discharge device 15 in the interior of the seat cushion 2. The air supply-discharge device 15 selectively supplies air to the airbags 10 and discharges the internal air from the airbags 10, thus expanding or contracting the airbags 10. In the present embodiment, the seat device 20, which has massaging function, by which the back of an occupant is pressed through the backrest surface S, and seat supporting function, by which the backrest surface S is displaced in the front-rear direction of the seat 1, is formed in the above-described manner.

Specifically, as illustrated in Fig. 2, the seat device 20 of the present embodiment includes a pump device 30, which forces air into the airbags 10. Multiple valve devices 40 are arranged in air supply lines L, which connect the corresponding airbags 10 to the pump device 30. In other words, the seat device 20 of the present embodiment includes a valve device 41, which is arranged in an air supply line L1 for the massage airbags 11, and a valve device 42, which is arranged in an air supply line L2 for the seat supporting airbag 12, and a valve device 43, which is arranged in an air supply line L3 for the seat supporting airbag 13. A controller 50 controls operation of the pump device 30 and operation of each of the valve devices 40 (41 to 43). In the seat device 20 of the present embodiment, the air supply-discharge device 15 for the airbags 10 is formed in the above-described manner.

More specifically, each of the valve devices 40 includes an air supply valve 40a, which is capable of blocking the air supply by the pump device 30, and an air discharge valve 40b, which is capable of releasing the internal air from the corresponding one of the airbags 10 to the exterior. The valve device 41, which is arranged in the air supply line L1 for the massage airbags 11, includes air supply valves 40a in respective branch lines La to Lc, which communicate with the corresponding airbags 11. Based on the combination of operation of each of the air supply valves 40a and the associated one of the air discharge valves 40b and operation of the pump device 30, the air supply-discharge device 15 of the present embodiment is capable of selectively supplying air to and discharging the internal air from the corresponding one of the airbags 10 separately for the respective air supply lines L1 to L3, in each of which the corresponding one of the valve devices 40 (41 to 43) is arranged.

That is, in execution of massaging control, the controller 50 of the present embodiment controls operation of the valve device 41, which is arranged in the air supply line L1 for the massage airbags 11. In execution of seat supporting control, the controller 50 of the embodiment controls operation of the valve device 42, which is arranged in the air supply line L2 for the seat supporting airbag 12, and operation of the valve device 43, which is arranged in the air supply line L3 for the seat supporting airbag 13.

Specifically, to supply air to any one of the airbags 10, the controller 50 drives the pump device 30 and opens the air supply valve 40a while closing the air discharge valve 40b in the corresponding one of the valve devices 40, which is arranged in the air supply line L (L1 to L3) for the airbag 10 that is the target of air supply. To discharge air from any one of the airbags 10, the controller 50 closes the air supply valve 40a and opens the air discharge valve 40b of the corresponding one of the valve devices 40, which is arranged in the air supply line L for the airbag 10 that is the target of air discharge.

In the seat device 20 of the present embodiment, a non-illustrated manipulation switch arranged in the seat 1 is manipulated to input a request signal S1, which represents a request for use of the massaging function of the seat device 20, and a request signal S2, which represents a request for use of the seat support function, to the controller 50. The controller 50 of the present embodiment controls operation of the valve device 42 in the air supply line L2 for the airbag 12, which is located in the shoulder portion (see Fig. 1, the upper end section) of the seatback 3, and operation of the valve device 43 in the air supply line L3 for the airbag 13, which is located in the lumbar portion (see Fig. 1, the lower section) of the seatback 3, independently from each other. In the seat device 20 of the present embodiment, a seat supporting device 55, which has a shoulder supporting function, by which the backrest surface S in the vicinity of the shoulder portion of the seatback 3 is displaced in the front-rear direction, and lumbar supporting function, by which the backrest surface S in the vicinity of the lumbar portion of the seatback 3 is displaced in the front-rear direction, is formed in the above-described manner.

In execution of the massaging control, the controller 50 of the present embodiment repeatedly expands and contracts each of the massage airbags 11. In this manner, the seat device 20 of the present embodiment allows the controller 50 to apply intermittent pressing force to the back of the occupant, who is in contact with the backrest surface S of the seatback 3 of the seat device 20.

Specifically, the seat device 20 of the present embodiment includes a pressure sensor 60, which is arranged in the air supply line L1 for the massage airbags 11. Based on an output signal from the pressure sensor 60, the controller 50 of the present embodiment detects the internal pressure P of each of the airbags 11. The controller 50 controls the operation of the pump device 30, which is a component of the air supply-discharge device 15, and the operation of the valve device 41, which is arranged in the air supply line L1, such that the detected internal pressure P of each airbag 11 increases or decreases between a first specific pressure P1 and a second specific pressure P2, which are set in advance.

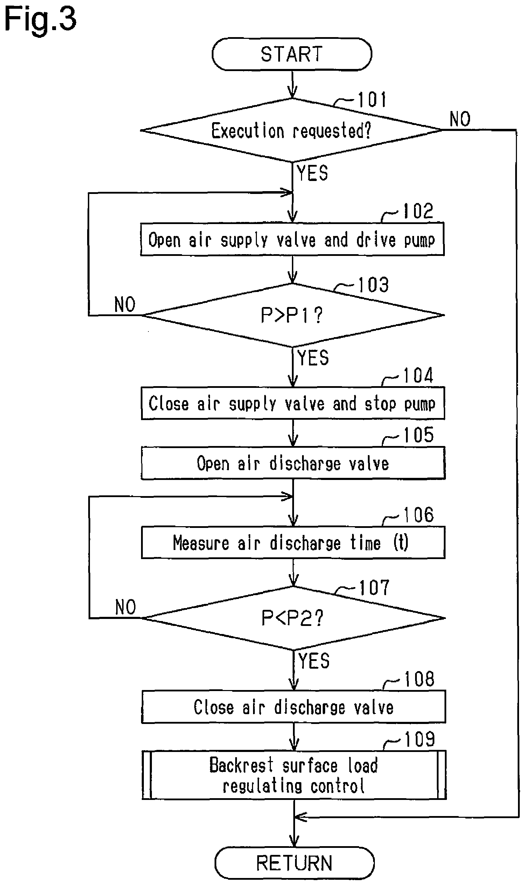

As shown in Fig. 3, if the request signal S1 for the massaging function is input (execution requested, Step 101: YES), the controller 50 of the present embodiment first executes air supply control of internal air for the massage airbags 11 to spread (expand) each of the airbags 11. Specifically, the controller 50 drives the pump device 30 and opens those of the air supply valves 40a that are arranged in the air supply line L1 (Step 102). The controller 50 continuously executes the air supply control of internal air for the airbags 11 until the internal pressure P of each airbag 11 exceeds the first specific pressure P1, which corresponds to the spread state of the airbag 11 (P ≤ P1, Step 103: NO, Step 102).

When the internal pressure P of each airbag 11 reaches the first specific pressure P1 (P > P1, Step 103: YES), the controller 50 of the present embodiment determines that each airbag 11 is in the spread state. The controller 50 of the present embodiment then executes air discharge control of internal air for the airbags 11 to contract the airbags 11. Specifically, the controller 50 of the present embodiment stops the pump device 30 and closes those of the air supply valves 40a that are arranged in the air supply line L1 (Step 104). Subsequently, the controller 50 opens those of the air discharge valves 40b that are arranged in the air supply line L1 (Step 105).

In the air discharge control, the controller 50 (a timer) of the present embodiment measures the air discharge time T of the internal air, which is needed for the contracting operation of each airbag 11 (Step 106). Specifically, if the internal pressure P of each airbag 11 is lower than the second specific pressure P2 (P < P2, Step 107: YES), the controller 50 of the present embodiment determines that each airbag 11 is in a contracted state. The controller 50 of the embodiment then ends the air discharge control of the internal air by closing the air discharge valves 40b that are arranged in the air supply line L1 (Step 108).

The controller 50 of the present embodiment measures the time that has elapsed from the time point at which the air discharge valves 40b are opened in Step 105 to the time point at which the air discharge valves 40b are closed in Step 108 as the air discharge time T of the internal air, which is needed for the contracting operation of each airbag 11. In the present embodiment, measurement of the air discharge time T is carried out using an internal counter of the controller 50 (P ≥ P1, Step 107: NO, Step 106). Based on the thus measured air discharge time T in the contracting operation, the controller 50 of the embodiment executes regulating control of the occupant load that acts on the backrest surface S of the seatback 3 (backrest surface load regulating control, Step 109).

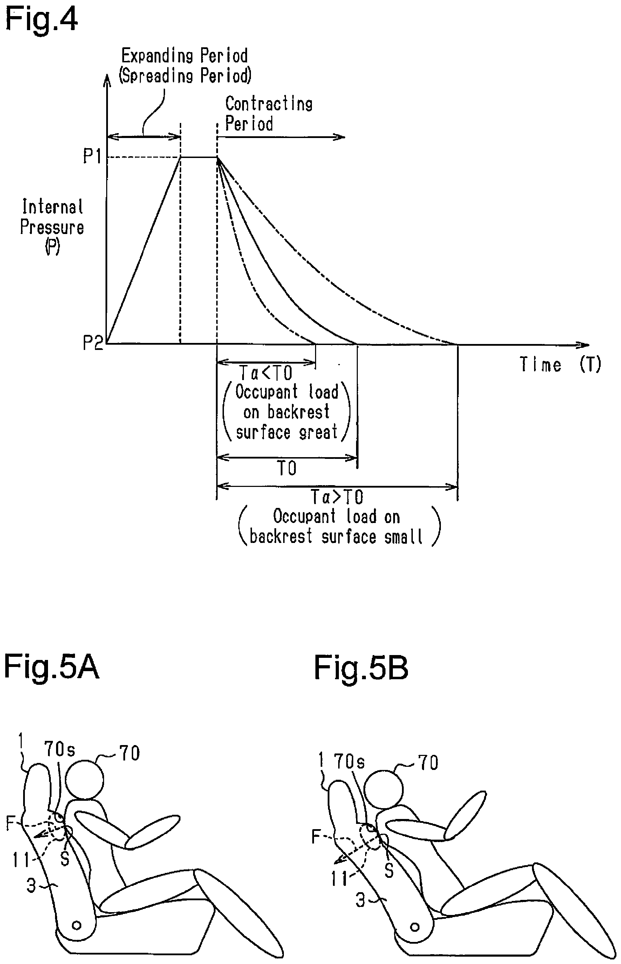

That is, as illustrated in Fig. 4, the air discharge time T of the internal air, which is needed for the contracting operation of each airbag 11, varies in correspondence with the occupant load acting on the backrest surface S of the seatback 3. In other words, the greater the external force acting on each airbag 11 through the cover 3s, which forms the backrest surface S, the more quickly the internal air is discharged. As a result, in the contracting operation of each airbag 11, the greater the occupant load acting on the backrest surface S of the seatback 3, the shorter becomes the air discharge time T of the internal air. The less the occupant load acting on the backrest surface S, the longer becomes the air discharge time T of the internal air.

In other words, the air discharge time T of the internal air, which is needed for the contracting operation of each airbag 11, correlates with the occupant load acting on the backrest surface S of the seatback 3, which is the pressing force of each airbag 11 transmitted to the back of the occupant through the backrest surface S.

With this fact taken into consideration, the controller 50 of the present embodiment compares a measured value of the air discharge time T obtained in the contracting operation of each airbag 11 (a measured value Tα) with a target value TO of the air discharge time T, which is set in advance. The controller 50 of the embodiment executes the backrest surface load regulating control in Step 109 such that the measured value Tα of the air discharge time T approaches the target value TO of the air discharge time T.

Specifically, as illustrated in Figs. 5A and 5B, the controller 50 of the present embodiment executes the backrest surface load regulating control by controlling operation of the seat reclining device 7. That is, by changing the inclination angle of the seatback 3, the backrest surface S of the seatback 3 is displaced. This varies the occupant load (F), which acts on the backrest surface S of the seatback 3.

Specifically, by inclining the seatback 3 rearward from the position represented in Fig. 5A, for example, inclination of the backrest surface S of the seatback 3 with respect to a vertical plane is increased. The backrest surface S is thus switched to the state facing upward, as shown in Fig. 5B. That is, the back 70b of the occupant 70, who is seated on the seat 1, comes into contact with the backrest surface S of the seatback 3 from above. This increases the occupant load F acting on the backrest surface S. As a result, the air discharge time T of the internal air, which is needed for the contracting operation of each airbag 11, is decreased.

For the illustrative purposes, Figs. 5A and 5B show only one of the airbags 11 located uppermost in the backrest surface S of the seatback 3 and the occupant load F acting in the vicinity of this airbag 11.

In contrast, by inclining the seatback 3 forward from the position represented in Fig. 5B, for example, the inclination of the backrest surface S of the seatback 3 with respect to the vertical plane is decreased. This decreases the occupant load F, which acts on the backrest surface S. The pressing force of each airbag 11, which is transmitted to the back 70b of the occupant 70 through the backrest surface S, is thus decreased. As a result, the air discharge time T of the internal air, which is needed for the contracting operation of each airbag 11, is increased.

Using not only the inclining control of the seatback 3 by means of the seat reclining device 7 but also the seat supporting function through expansion and contraction of the airbags 12, 13, the controller 50 of the present embodiment executes the backrest surface load regulating control.

That is, the seat supporting device 55 of the present embodiment spreads (expands) the seat supporting airbags 12, 13 to displace (project) the backrest surface S of the seatback 3 forward. The backrest surface S is thus pressed against the back 70b (the shoulder region and the lumbar region) of the occupant 70. In this manner, the seat supporting device 55 promotes its seat supporting function. By contracting the airbags 12, 13 to displace (retract) the backrest surface S rearward, the force by which the backrest surface S is pressed against the back 70b of the occupant 70 is decreased. The seat supporting device 55 thus relaxes the seat supporting function.

That is, by displacing the backrest surface S of the seatback 3 forward through the seat supporting function, the occupant load F acting on the backrest surface S is increased. By displacing the backrest surface S of the seatback 3 rearward, the occupant load F acting on the backrest surface S is decreased. The air discharge time T of the internal air, which is needed for the contracting operation of each massage airbag 11, also changes in correspondence with such change of the occupant load F.

The controller 50 of the present embodiment executes the backrest surface load regulating control based on the above-described relationship between displacement of the backrest surface S and change of the occupant load F acting on the backrest surface S. This allows the seat device 20 of the embodiment to optimize the force by which the massage airbags 11 press the back of the occupant through the backrest surface S of the seatback 3.

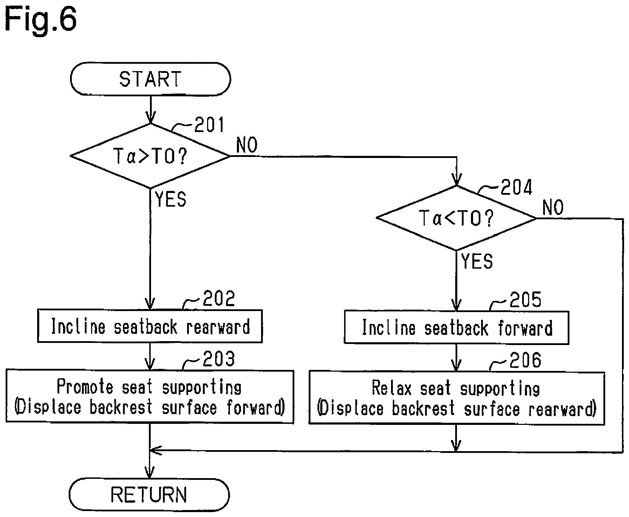

Specifically, with reference to the flowchart of Fig. 6, first in the backrest surface load regulating control, the controller 50 of the present embodiment determines whether the measured value Tα of the air discharge time T is greater than the target value T0 of the air discharge time T (Step 201). When the measured value Tα is greater than the target value TO (Tα > T0, Step 201: YES), the controller 50 controls the operation of the seat reclining device 7 and the operation of the seat supporting device 55 to displace the backrest surface S of the seatback 3 in such a direction that the occupant load F acting on the backrest surface S increases.

That is, the controller 50 controls the operation of the seat reclining device 7 to incline the seatback 3 rearward (Step 202). The controller 50 controls the operation of the seat supporting device 55 to displace the backrest surface S of the seatback 3 forward (Step 203).

Also, the controller 50 of the present embodiment determines whether the measured value Tα of the air discharge time T is less than the target value T0 of the air discharge time T (Step 204). If the measured value Tα is less than the target value T0 (Tα < T0, Step 204: YES), the controller 50 controls the operation of the seat reclining device 7 and the operation of the seat supporting device 55 to displace the backrest surface S of the seatback 3 in such a direction that the occupant load F acting on the backrest surface S decreases.

That is, the controller 50 controls the operation of the seat reclining device 7 to incline the seatback 3 forward (Step 205). The controller 50 controls the operation of the seat supporting device 55 to displace the backrest surface S of the seatback 3 rearward (Step 206).

The controller 50 of the present embodiment periodically executes the aforementioned procedures of Steps 101 to 109, which are represented in the flowchart of Fig. 3, including the above-described backrest surface load regulating control. In the embodiment, through execution of the backrest surface load regulating control, the inclination angle of the seatback 3 is changed discretely by a predetermined angle for every one of the execution cycles. Similarly, the projecting amount of the backrest surface S is changed discretely by a predetermined amount for each execution cycle. In this manner, the seat device 20 of the present embodiment causes the air discharge time T of the internal air, which is needed for the contracting operation of each massage airbag 11, to approach the target value TO. This allows the seat device 20 to optimize the pressing force of each massage airbag 11, which is transmitted to the back 70b of the occupant 70 through the backrest surface S of the seatback 3.

The present embodiment achieves the following advantages.
(1) The seat device 20 includes the massage airbags 11, the air supply-discharge device 15, and the controller 50. The airbags 11 press the back 70b of the occupant 70 through the backrest surface 70b of the seatback 3 by performing expanding operation and contracting operation in the interior of the seatback 3. The air supply-discharge device 15 selectively supplies air to and discharges internal air from the airbags 11 based on the internal pressure of each airbag 11. The controller 50 controls the operation of the air supply-discharge device 15. The controller 50 also measures the air discharge time T of the internal air, which is needed for the contracting operation of each airbag 11. The controller 50 executes the backrest surface load regulating control, by which the backrest surface S of the seatback 3 is displaced, such that the measured value Tα of the air discharge time T approaches the target value TO of the air discharge time T as the occupant load F acting on the backrest surface S changes.
   That is, the air discharge time T of the internal air, which is needed for the contracting operation of each airbag 11, represents the occupant load acting on the backrest surface S of the seatback 3, which is the pressing force of each airbag 11 transmitted to the back 70b of the occupant 70 through the backrest surface S. The occupant load acting on the backrest surface S of the seatback 3 is changed by displacing the seatback surface S. Therefore, in this case, the pressing force of each airbag 11, which is transmitted to the back 70b of the occupant 70 through the backrest surface S, is optimized without great modification such as addition of a surface pressure sensor in the backrest surface S. As a result, the back 70b of the occupant 70 is massaged with improved effectiveness.
(2) If the measured value Tα of the air discharge time T is greater than the target value T0 of the air discharge time T, the controller 50 displaces the backrest surface S of the seatback 3 in such a direction that the occupant load F acting on the backrest surface S increases. When the measured value Tα of the air discharge time T is less than the target value T0 of the air discharge time T, the controller 50 displaces the backrest surface S of the seatback 3 in such a direction that the occupant load F acting on the backrest surface S decreases.
   That is, in the contracting operation of each airbag 11, the less the occupant load acting on the backrest surface S of the seatback 3, the greater becomes the air discharge time T of the internal air. The greater the occupant load acting on the backrest surface S of the seatback 3, the shorter becomes the air discharge time T of the internal air. This corrects excess or insufficiency in the force by which each airbag 11 presses the back 70b of the occupant 70 through the backrest surface S.
(3) The controller 50 controls the operation of the seat reclining device 7 to incline the seatback 3 rearward if the measured value Tα of the air discharge time T is greater than the target value TO of the air discharge time T and to incline the seatback 3 forward if the measured value Tα of the air discharge time T is less than the target value TO of the air discharge time T.
   That is, by inclining the seatback 3 rearward, the backrest surface S of the seatback 3 is switched to the state facing upward. In other words, the inclination of the backrest surface S with respect to a vertical plane increases, thus causing the back 70b of the occupant 70, who is seated on the seat 1, to contact the backrest surface S of the seatback 3 from above. The occupant load F acting on the backrest surface S is thus increased. This corrects an insufficient state of the pressing force of each airbag 11, which is transmitted to the back 70b of the occupant 70 through the backrest surface S.
   On the other hand, when the seatback 3 is inclined forward, the inclination of the backrest surface S of the seatback 3 with respect to the vertical plane is decreased. The occupant load F acting on the backrest surface S is thus decreased. This corrects an excessive state of the pressing force of each airbag 11, which is transmitted to the back 70b of the occupant 70 through the backrest surface S.
(4) The controller 50 controls the operation of the seat supporting device 55 to displace the backrest surface S forward if the measured value Tα of the air discharge time T is greater than the target value TO of the air discharge time T and to displace the backrest surface S rearward if the measured value Tα of the air discharge time T is less than the target value T0 of the air discharge time T.

That is, by displacing (projecting) the backrest surface S of the seatback 3 forward through the seat supporting function and pressing the backrest surface S against the back 70b of the occupant 70, the occupant load F acting on the backrest surface S is increased. This corrects an insufficient state of the pressing force of each airbag 11, which is transmitted to the back 70b of the occupant 70 through the backrest surface S.

On the other hand, by displacing the backrest surface S of the seatback 3 rearward, the occupant load F acting on the backrest surface S is decreased. This corrects an excessive state of the pressing force of each airbag 11, which is transmitted to the back 70b of the occupant 70 through the backrest surface S.

The above-described embodiment may be modified as follows.

In the above-described embodiment, the seat reclining device 7 and the seat supporting device 55 are each used as a displacement device. However, instead of this, only one of the seat reclining device 7 and the seat supporting device 55 may be used as a displacement device. In addition to this, or instead of this, any device other than the seat reclining device 7 or the seat supporting device 55 may be used as a displacement device.

The seat supporting device 55 of the above-described embodiment exerts the shoulder supporting function and the lumbar supporting function through the expanding operation and the contracting operation of each of the airbags 12, 13, which are arranged in the interior of the seatback 3. However, instead of this, only one of the shoulder supporting function and the lumbar supporting function, for example, may be exerted. Also, any portion other than the shoulder portion and the lumbar portion of the backrest surface S may be displaced in the front-rear direction. Further, the number of the seat supporting airbags, which are selectively expanded and contracted in the interior of the seatback 3, may be changed as needed. For example, the backrest surface S may be displaced in the front-rear direction using any force other than pneumatic pressure, such as force of a motor used as a drive source.

In the above-described embodiment, through execution of the massaging control, measurement of the air discharge time T of the internal air, which is needed for the contracting operation of each massage airbag 11, and the backrest surface load regulating control are performed periodically (see Fig. 3). The inclination angle of the seatback 3 and the projecting amount of the backrest surface S are changed discretely by a predetermined angle or amount for each execution cycle of the backrest surface load regulating control. However, instead of this, the difference between the measured value Tα and the target value T0 of the air discharge time T may be obtained, for example, at the start of the massaging control. Based on the difference between the target value TO and the measured value Tα, expected change values for the inclination angle of the seatback 3 and the projecting amount of the backrest surface S may be determined. In this case, changes corresponding to such expected change values may be accomplished either by a single time of regulation at the start of the massaging control or after multiple times of regulation.

In the above-described embodiment, the controller 50, which controls the operation of the air supply-discharge device 15, controls the operation of the seat reclining device 7 and the operation of the seat supporting device 55, each serving as a displacement device. However, instead of this, a load regulating device, which controls operation of the displacement device, and (a controller of) the air supply-discharge device may be independent of each other. Also, the timer may be independent of the load regulating device and the air supply-discharge device.

In the above-described embodiment, if the measured value Tα of the air discharge time T is greater than the target value TO of the air discharge time T, the backrest surface S is displaced in such a direction that the occupant load F acting on the backrest surface S increases. If the measured value Tα is less than the target value T0, the backrest surface S is displaced in such a direction that the occupant load F acting on the backrest surface S decreases. However, instead of this, the backrest surface S may be displaced only when the measured value Tα of the air discharge time T is greater than the target value T0. Alternatively, the backrest surface S may be displaced only when the measured value Tα of the air discharge time T is less than the target value TO.

In the above-described embodiment, the target value T0 of the air discharge time T is a predetermined value. However, instead of this, in a case in which the intensity of the massaging function is changeable, for example, the target value T0 of the air discharge time T may be changed in correspondence with the intensity of the massaging function.

In the above-described embodiment, the massage airbags 11 are simultaneously controlled to be selectively expanded and contracted. However, control of the expanding operation and the contracting operation may be carried out separately for the respective airbags 11. Alternatively, control of the expanding operation and the contracting operation may be carried out separately for respective sections located on the backrest surface S. In this case, for example, if the air discharge time T of those of the airbags 11 located in the lumbar portion of the backrest surface S is great, the lumbar supporting function may be promoted. That is, measurement of the air discharge time T of the internal air and the backrest surface load regulating control may be performed separately for respective control blocks of the massage airbags 11.

In the above-described embodiment, the massage airbags 11, which are arranged in the interior of the seatback 3, are subjected to measurement of the air discharge time T of the internal air and the backrest surface load regulating control. However, instead of this, any other seat member such as an ottoman or an arm rest may be subjected to measurement of the air discharge time T of the internal air and the load regulating control of a contact surface of the seat component. The seat component may also be a seat cushion or a headrest.

In this case, the backrest surface S of the seatback 3 may be considered as the contact surface of the seat member, which is the target of the load regulating control. The back 70b of the occupant 70 may be considered as a contact region of an occupant with respect to the contact surface of the seat member. If the seat member, which is the target value, has a driver, the driver and the controller function as a displacement device and a load regulating device.

Next, the technical ideas obtainable from the above embodiments are described below with their advantages.
(A) A seat device, wherein, if a measured value of the air discharge time is less than a target value of the air discharge time, the load regulating device controls operation of the seat reclining device to incline the seatback forward.
(B) A seat device, wherein, if a measured value of the air discharge time is less than a target value of the air discharge time, the load regulating device controls operation of the seat reclining device to displace the backrest surface rearward.

According to the above-described technical ideas, the occupant load acting on the backrest surface of the seatback is decreased. This corrects an excessive state of the pressing force of each airbag, which is transmitted to the back of the occupant through the backrest surface.

## Claims

1. A seat device comprising:
a seatback (3) having a backrest surface (S);
a massage airbag (11) that presses the back of an occupant through the backrest surface (S) by performing expanding operation and contracting operation in the interior of the seatback (3);
an air supply-discharge device (15) that selectively supplies air to and discharges internal air from the airbag (11) based on an internal pressure of the airbag;
a displacement device (50) that displaces the backrest surface (S);
a timer (50) that measures an air discharge time (T) of the internal air needed for the contracting operation of the airbag; and
a load regulating device (50) that controls operation of the displacement device such that a measured value (Tα) of the air discharge time (T) approaches a target value (T0) of the air discharge time (T) in correspondence with a change of an occupant load (F) acting on the backrest surface (S) due to displacement of the backrest surface (S),
**characterized in that** the displacement device (50) includes a seat supporting device (55) that displaces the backrest surface (S) in a front-rear direction, and **in that**
if the measured value (Tα) of the air discharge time (T) is greater than the target value (T0) of the air discharge time, the load regulating device (50) controls operation of the seat supporting device (55) to displace the backrest surface (S) forward.

2. The seat device according to claim 1, wherein, if the measured value (Tα) of the air discharge time (T) is greater than the target value (T0) of the air discharge time, the load regulating device controls (50) the operation of the displacement device to displace the backrest surface (S) in such a direction that the occupant load (F) acting on the backrest surface (S) increases.

3. The seat device according to claim 1 or 2, wherein
the displacement device (50) includes a seat reclining device (7) that inclines the seatback (3), and
if the measured value (Tα) of the air discharge time (T) is greater than the target value (T0) of the air discharge time, the load regulating device (50) controls operation of the seat reclining device (7) to incline the seatback (3) rearward.

4. The seat device according to any one of claims 1 to 3, wherein, if the measured value (Tα) of the air discharge time (T) is less than the target value (T0) of the air discharge time, the load regulating device (50) controls the operation of the displacement device to displace the backrest surface (S) in such a direction that the occupant load (F) acting on the backrest surface (S) decreases.

5. The seat device according to any one of claims 1 to 4, wherein
the displacement device (50) includes a seat reclining device (7) that inclines the seatback (3), and
if the measured value (Tα) of the air discharge time (T) is less than the target value (TO) of the air discharge time, the load regulating device (50) controls operation of the seat reclining device (7) to incline the seatback (3) forward.

6. The seat device according to any one of claims 1 to 5, wherein
the displacement device (50) includes a seat supporting device (55) that displaces the backrest surface (S) in a front-rear direction, and
if the measured value (Tα) of the air discharge time (T) is less than the target value (T0) of the air discharge time, the load regulating device (50) controls operation of the seat supporting device (55) to displace the backrest surface (S) rearward.

## Patentansprüche

1. Sitzvorrichtung, umfassend:
einen Sitzrücken (3) mit einer Rückenlehnen-Oberfläche (S),
einen Massage-Airbag (11), der gegen den Rücken eines Passagiers durch die Rückenlehnen-Oberfläche (S) drückt, indem ein Ausdehnungsvorgang und ein Kontraktionsvorgang in dem Innenraum des Sitzrückens (3) durchgeführt werden,
eine Luft-Zuführ-/Abführ-Vorrichtung (15), die auf Grundlage eines Innendrucks des Airbags selektiv Luft in den Airbag (11) zuführt und Innenluft daraus abführt,
eine Verschiebevorrichtung (50), welche die Rückenlehnen-Oberfläche (S) verschiebt,
einen Zeitnehmer (50), der die Luftabführzeit (T) der Innenluft, die für den Kontraktionsvorgang des Airbags erforderlich ist, misst, und
eine Lastregelvorrichtung (50), die den Betrieb der Verschiebevorrichtung so steuert, dass ein gemessener Wert (Tα) der Luftabführzeit (T) sich einem Zielwert (T0) der Luftabführzeit (T) annähert, entsprechend einer Veränderung einer Passagierlast (F), die auf die Rückenlehnen-Oberfläche (S) aufgrund der Verschiebung der Rückenlehnen-Oberfläche (S) wirkt,
**dadurch gekennzeichnet,**
**dass** die Verschiebevorrichtung (50) eine Sitztragvorrichtung (55) beinhaltet, welche die Rückenlehnen-Oberfläche (S) in einer Vorwärts-Rückwärts-Richtung verschiebt, und
**dass**, wenn der gemessene Wert (Tα) der Luftabführzeit (T) größer als der Zielwert (T0) der Luftabführzeit ist, die Lastregelvorrichtung (50) den Betrieb der Sitztragvorrichtung (55) steuert, um die Rückenlehnen-Oberfläche (S) nach vorne zu verschieben.

2. Sitzvorrichtung nach Anspruch 1, wobei, wenn der gemessene Wert (Tα) der Luftabführzeit (T) größer als der Zielwert (T0) der Luftabführzeit ist, die Lastregelvorrichtung (50) den Betrieb der Verschiebevorrichtung steuert, um die Rückenlehnen-Oberfläche (S) in einer solchen Richtung zu verschieben, dass die Passagierlast (F), die auf die Rückenlehnen-Oberfläche (S) wirkt, zunimmt.

3. Sitzvorrichtung nach Anspruch 1 oder 2, wobei
die Verschiebevorrichtung (50) eine Sitzneigevorrichtung (7) beinhaltet, die den Sitzrücken (3) neigt, und
wenn der gemessene Wert (Tα) der Luftabführzeit (T) größer als der Zielwert (T0) der Luftabführzeit ist, die Lastregelvorrichtung (50) den Betrieb der Sitzneigevorrichtung (7) steuert, um den Sitzrücken (3) nach hinten zu neigen.

4. Sitzvorrichtung nach einem der Ansprüche 1 bis 3, wobei, wenn der gemessene Wert (Tα) der Luftabführzeit (T) kleiner als der Zielwert (T0) der Luftabführzeit ist, die Lastregelvorrichtung (50) den Betrieb der Verschiebevorrichtung steuert, um die Rückenlehnen-Oberfläche (S) in einer solchen Richtung zu verschieben, dass die Passagierlast (F), die auf die Rückenlehnen-Oberfläche (S) wirkt, abnimmt.

5. Sitzvorrichtung nach einem der Ansprüche 1 bis 4, wobei
die Verschiebevorrichtung (50) eine Sitzneigevorrichtung (7) beinhaltet, die den Sitzrücken (3) neigt, und
wenn der gemessene Wert (Tα) der Luftabführzeit (T) kleiner als der Zielwert (T0) der Luftabführzeit ist, die Lastregelvorrichtung (50) den Betrieb der Sitzneigevorrichtung (7) steuert, um den Sitzrücken (3) nach vorne zu neigen.

6. Sitzvorrichtung nach einem der Ansprüche 1 bis 5, wobei
die Verschiebevorrichtung (50) eine Sitztragvorrichtung (55) beinhaltet, welche die Rückenlehnen-Oberfläche (S) in einer Vorwärts-Rückwärts-Richtung verschiebt, und
wenn der gemessene Wert (Tα) der Luftabführzeit (T) kleiner als der Zielwert (T0) der Luftabführzeit ist, die Lastregelvorrichtung (50) den Betrieb der Sitztragvorrichtung (7) steuert, um die Rückenlehnen-Oberfläche (S) nach hinten zu verschieben.

## Revendications

1. Dispositif de siège comprenant :
un dossier de siège (3) ayant une surface de dossier (S) ;
un sac gonflable de massage (11) qui exerce une pression sur le dos d'un occupant à travers la surface de dossier (S) en se déployant et en se rétractant à l'intérieur du dossier de siège (3) ;
un dispositif d'alimentation en air et d'évacuation d'air (15) qui, sélectivement, alimente en air le sac gonflable (11) et évacue l'air interne de celui-ci sur la base d'une pression interne du sac gonflable ;
un dispositif de déplacement (50) qui déplace la surface de dossier (S) ;
un temporisateur (50) qui mesure un temps d'évacuation d'air (T) de l'air interne nécessaire pour la rétractation du sac gonflable ; et
un dispositif de réglage de charge (50) qui commande l'actionnement du dispositif de déplacement de sorte qu'une valeur mesurée (Tα) du temps d'évacuation d'air (T) soit proche d'une valeur cible (T0) du temps d'évacuation d'air (T) en correspondance avec une modification d'une charge de l'occupant (F) agissant sur la surface de dossier (S) en raison d'un déplacement de la surface de dossier (S),
**caractérisé en ce que** le dispositif de déplacement (50) comporte un dispositif de support de siège (55) qui déplace la surface de dossier (S) dans une direction avant/arrière, et **en ce que**
si la valeur mesurée (Tα) du temps d'évacuation d'air (T) est supérieure à la valeur cible (T0) du temps d'évacuation d'air, le dispositif de réglage de charge (50) commande l'actionnement du dispositif de support de siège (55) pour déplacer la surface de dossier (S) vers l'avant.

2. Dispositif de siège selon la revendication 1,
dans lequel, si la valeur mesurée (Tα) du temps d'évacuation d'air (T) est supérieure à la valeur cible (T0) du temps d'évacuation d'air, le dispositif de réglage de charge (50) commande l'actionnement du dispositif de déplacement pour déplacer la surface de dossier (S) dans une direction telle que la charge de l'occupant (F) agissant sur la surface de dossier (S) augmente.

3. Dispositif de siège selon la revendication 1 ou 2, dans lequel le dispositif de déplacement (50) comporte un dispositif de rabattage de siège (7) qui incline le dossier de siège (3), et
si la valeur mesurée (Tα) du temps d'évacuation d'air (T) est supérieure à la valeur cible (T0) du temps d'évacuation d'air, le dispositif de réglage de charge (50) commande l'actionnement du dispositif de rabattage de siège (7) pour incliner le dossier de siège (3) vers l'arrière.

4. Dispositif de siège selon l'une quelconque des revendications 1 à 3, dans lequel, si la valeur mesurée (Tα) du temps d'évacuation d'air (T) est inférieure à la valeur cible (T0) du temps d'évacuation d'air, le dispositif de réglage de charge (50) commande l'actionnement du dispositif de déplacement pour déplacer la surface de dossier (S) dans une direction telle que la charge de l'occupant (F) agissant sur la surface de dossier (S) diminue.

5. Dispositif de siège selon l'une quelconque des revendications 1 à 4, dans lequel
le dispositif de déplacement (50) comporte un dispositif de rabattage de siège (7) qui incline le dossier de siège (3), et
si la valeur mesurée (Tα) du temps d'évacuation d'air (T) est inférieure à la valeur cible (T0) du temps d'évacuation d'air, le dispositif de réglage de charge (50) commande l'actionnement du dispositif de rabattage de siège (7) pour incliner le dossier de siège (3) vers l'avant.

6. Dispositif de siège selon l'une quelconque des revendications 1 à 5, dans lequel
le dispositif de déplacement (50) comporte un dispositif de support de siège (55) qui déplace la surface de dossier (S) dans une direction avant/arrière, et
si la valeur mesurée (Tα) du temps d'évacuation d'air (T) est inférieure à la valeur cible (T0) du temps d'évacuation d'air, le dispositif de réglage de charge (50) commande l'actionnement du dispositif de support de siège (55) pour déplacer la surface de dossier (S) vers l'arrière.
